# EUROPÄISCHE PATENTSCHRIFT

(11) **EP 0 643 789 B1**
(45) Veröffentlichungstag und Bekanntmachung des Hinweises auf die Patenterteilung: **06.03.1996**
(21) Anmeldenummer: 93911773.5
(22) Anmeldetag: 21.04.1993
(51) Int. Cl.: E03F 3/06, F16L 55/165

(54) **SYSTEM UND VERFAHREN ZUM RELINING VON KANALROHRABSCHNITTEN**
SYSTEM AND METHOD OF RELINING SEWER PIPE SECTIONS
SYSTEME ET PROCEDE POUR RENOUVELER LE REVETEMENT DE SECTIONS DE CANALISATION

(30) Priorität: 21.04.1992 DE 4213068
(43) Veröffentlichungstag der Anmeldung: 22.03.1995
(73) Patentinhaber: HT TROPLAST AG, D-53839 Troisdorf (DE)
(72) Erfinder: SCHMAGER, Klaus, D-5207 Ruppichteroth-Winterscheid (DE)
(86) Internationale Anmeldenummer: EP9300974
(87) Internationale Veröffentlichungsnummer: WO9321399

(56) Entgegenhaltungen:
- EP-A- 0 060 134
- WO-A-88/03598
- WO-A-89/04435
- DE-U- 9 012 003

## Beschreibung

Die Erfindung betrifft ein System und ein Verfahren zum Relining von Transportleitungen wie Kanalrohrleitungen bzw. -abschnitten.

Relining ist ein Verfahren zum Sanieren beschädigter, im allgemeinen unterirdischer Transportleitungen durch Einbringen eines neuen Innenrohrstranges o. dgl. in die beschädigte vorhandene Leitung.

Bei einem bekannten Relining-Verfahren wird ein langer Rohrstrang aus zusammengeschweißten Kunststoffrohren, z. B. aus Polyethylen, in den beschädigten Kanalabschnitt eingeschoben. Da die Rohre wenig flexibel sind, sind hierzu größere Baugruben erforderlich.

Bei dem sogenannten Kurzrohrrelining werden kurze Kunststoffrohre einer Länge von ca. 0,5 bis max. 1 m in vorhandenen Standard-Kanalschächten zusammengesteckt und von diesem Kanalschacht aus in den zu sanierenden Kanalabschnitt eingeschoben oder eingezogen (DE-A 34 13 294).

Diese Rohre sind in der Regel durch die Vielzahl von Rohrverbindungen gegen Exfiltration und bei anstehendem Grundwasser (Wassereintritt von außen) gegen Infiltration nicht zuverlässig dicht. Weiterhin können die relativ starren Kunststoffrohre nur eingesetzt werden, wenn der beschädigte Kanalabschnitt einen weitgehend unveränderten Innendurchmesser aufweist.

Es ist schon vorgeschlagen worden (DE-A 27 04 438), Kanalrohre dadurch zu sanieren, daß in das Innere des Abflußrohres eine flexible Rohrleitung eingeführt wird, deren Außendurchmesser kleiner als der Innendurchmesser des Abflußrohres ist, wobei die flexible Rohrleitung mit Abstand zum Abflußrohr unter Bildung eines Ringraumes angeordnet wird. Bei diesem Verfahren wird dieser Ringraum mit einer aushärtbaren Verfüllmasse niedriger Viskosität ausgefüllt, wobei als Verfüllmasse beispielsweise Magnesiumzement verwendet wird. Ein wesentlicher Nachteil dieses Verfahrens ist es, daß die Zentrierung des Inliners gegenüber dem zu sanierenden Rohr nicht oder nur mit großem Aufwand bewerkstelligt werden kann. Bei von außen einwirkendem Wasserdruck besteht weiterhin die Gefahr einer Einbeulung der neuen Rohrleitung.

Zur Vermeidung dieser Nachteile wird in der DE-A1 39 30 984 ein Verfahren vorgeschlagen, bei dem ein Auskleidungsschlauch (Inliner) aus Weich-PVC eingesetzt wird, der auf seiner Außenseite eine starkfädrige Wirrfaserschicht aus Polyamid als Abstandshalter aufweist. In den durch die Wirrfaserschicht freigehaltenen Ringraum zwischen dem zu sanierenden Kanalrohr und dem eigentlichen Inliner wird ein schnellhärtender Mörtel (sog. Dämmer) eingebracht und ausgehärtet. Ein ähnliches Verfahren wird in der DE-A1 39 34 980 vorgeschlagen, wobei als Material für den Inliner auch HDPE (Polyethylen hoher Dichte) vorgesehen ist.

Weich-PVC weist allerdings für viele Anwendungszwecke eine mangelhafte Resistenz gegen Chemikalien auf. Schließlich ist die Herstellung dieser zweischichtigen Inliner (eigentlicher Inliner sowie Wirrfaserschicht) aufwendig und bei vielen Materialkombinationen praktisch unmöglich.

Aus dem "Sonderdruck aus bbr 5/90; U-Liners; Protokoll einer Sanierung, Imbema Rohrsanierungs GmbH" ist ein Verfahren zum Relining von Abwasserkanälen bekannt, bei dem zunächst ein endloses steifes HDPE-Rohr unter starker Erwärmung fabrikmäßig zu einem U-förmigen Querschnitt gefaltet und dieser deformierte Querschnitt mit Bändern fixiert wird. Dieses immer noch recht steife Gebilde wird anschließend in den Kanal eingezogen und mit Wasserdampf unter erhöhtem Druck (ca. 1,3 bar) bis in den thermoplastischen Zustand erwärmt, wobei das HDPE-Rohr wieder seinen ursprünglich runden Querschnitt einnimmt. Dieses Verfahren ist durch hohen Aufwand und Energieverbrauch gekennzeichnet.

Aus der WO 91/10862 sowie dem Firmenprospekt "Steuler Umwelttechnik, Bekaplast für Kanalrohre, 1989" ist schließlich eine Noppen-Abdichtungsbahn zum Relining von Abwasserrohren bekannt. Dieser steife Inliner aus HDPE ist jedoch nur zum nachträglichen Sanieren von begehbaren Kanalrohren mit größerem Durchmesser verwendbar.

Die DE-U 90 12 003 beschreibt ein Rohr-Relining, bei welchem in den Raum, der zwischen einer außen mit Noppen versehenen Kunststoffbahn und dem Kanalrohr gebildet wird, Mörtel eingebracht wird, um die Bahn zu verankern. Dieses Verfahren hat den Nachteil, daß bei beschädigten Kanalrohren der Mörtel in in dem Rohr befindlichen Rissen abfließen kann und sich in dem zu verfüllenden Raum nicht vollständig verteilt, so daß die Menge des benötigten Mörtels nicht im voraus bestimmt werden kann. Darüberhinaus führt die ungenügende Verfüllung mit Mörtel zu einer mangelhaften Verankerung der Bahn.

In der WO-A 8 803 593 wird ein Relining-Verfahren vorgeschlagen mit streifenweiser Anbringung einer ersten Kunststoffbahn, auf die Mörtel aufgebracht wird, und anschließendem Befestigen einer zweiten Kunststoffbahn in Halterungen der ersten Bahn. Dieses Verfahren ist nur bei begehbaren Kanalrohren einsetzbar.

Aus der DE-C 23 62 784 ist ein System bekannt, bei dem ein einseitig mit Kunststoff beschichteter Vliesschlauch mit Harz und Härter vorab so getränkt wird, daß er nach dem Einbringen in die zu sanierende Rohrleitung im Umstülpverfahren und nach Anpressung an die Rohrwandung mittels Wasserdruck durch Erwärmung des Systems aushärtet und so ein neues Leitungssystem mit steifer Rohrwandung darstellt. Da das Harz-Härter-System im Trägervlies nur eine begrenzte Verarbeitungszeit (Topfzeit) hat, muß die Tränkung, der Transport zur Baustelle (evtl. im Kühlwagen) und das Einbringen innerhalb einer relativ kurzen Zeitspanne erfolgen. Für die Sanierung eines ganzen Rohrstranges ist dieses System mit harzimprägniertem Vlies eine anpassungsfähige Lösung. Nachteilig ist die Gefahr von Lufteinschlüssen beim Umstülpen, der Aufwand für den relativ kurzen Zeitbereich zwischen der Harztränkung des Vlieses und der Aushärtung im zu sanierenden Rohrstrang sowie die relativ lange Aufheizung.

Dieses Verfahren ist zudem nur befriedigend anwendbar für zu sanierende Rohre, die keine größeren Risse oder Auskolkungen aufweisen, da durch diese das Harz vor der Aushärtung austreten könnte oder da sonst das neue Fließgerinne zu große Unebenheiten aufweisen würde. Bei einem ähnlichen Verfahren (EP-A1 0 260 341) wird dieser Nachteil dadurch vermieden, daß zunächst ein äußerer harzgetränkter Vliesschlauch in den zu sanierenden Kanal eingezogen wird, wonach ein innerer ebenfalls harzgetränkter Kalibrierschlauch im Umstülpverfahren in den äußeren Vliesschlauch eingebracht wird. Nach Aushärtung des Harzes entsteht ein starres neues Rohr, das keine Verbindung mehr zum zu sanierenden alten Rohr aufweist. Durch die Verwendung von zwei harzgetränkten Vliesschläuchen ist dieses Verfahren allerdings sehr aufwendig und teuer.

Trotz der Vielzahl von Lösungsvorschlägen zum Relining von defekten Kanalrohren fehlt es bislang an einem überzeugenden System und Verfahren, das
- keine zusätzlichen Erdarbeiten benötigt, d. h. vorhandene Schachtbauwerke ausnutzt,
- auch bei starker Beschädigung des alten Kanalrohres und auch bei unrunden Kanalquerschnitten einsetzbar ist,
- ohne hohen Aufwand und Energieeinsatz bei der Verlegung auskommt,
- ohne große Verringerung des Fließquerschnitts zu einem mechanisch und chemisch hochbelastbaren Inliner-Rohr führt, das
- absolut dicht ist gegen Infiltration und Exfiltration und insbesondere die Dichtigkeitsanforderungen nach DIN 4033 für Kunststoffrohrleitungen erfüllt,
- sowie ohne zusätzlichen Aufwand einsetzbar ist für sämtliche Rohrdurchmesser, insbesondere auch für nicht begehbare Rohre.

Aufgabe der Erfindung ist es, ein System und ein Verfahren zur Verfügung zu stellen, das diese Anforderungen erfüllt.

Ein weiteres Anliegen der Erfindung ist es, eine leichtere Kontrollierbarkeit des Inliners zu ermöglichen. Schließlich ist es ein weiteres Anliegen der Erfindung, eine spätere Reparatur des Inliners bei Beschädigung zu vereinfachen.

Die Erfindung löst diese Aufgabe durch ein System gemäß Anspruch 1 bzw. durch ein Verfahren gemäß Anspruch 8, bevorzugt in Verbindung mit einem oder mehreren Merkmalen der Unteransprüche.

Als Preliner kann im einfachsten Fall ein beidseitig glatter Schlauch aus thermoplastischem Material eingesetzt werden.

Der innere schlauchförmige thermoplastische Inliner weist bevorzugt eine Wanddicke von 1,5 bis 5 mm auf, wobei bei zu sanierenden Kanälen mit größerem Nenndurchmesser (DN z. B. > 1000 mm) auch größere Wandstärken verwendet werden können. Entsprechend können bei kleinen Durchmessern der zu sanierenden Kanäle (DN z. B. 150 mm) geringere Wandstärken gewählt werden.

Der eigentliche (innere) Inliner weist auf seiner Außenseite Abstandshalter auf, die z. B. in Form von hinterschnittenen Rippen oder einer starkfädrigen Wirrfaserschicht entsprechend der DE-A1 39 30 984 ausgeführt sein können. Bevorzugt ist der Inliner jedoch auf seiner späteren Außenseite mit einer Vielzahl von Noppen besetzt, die bevorzugt einen Durchmesser von 5 bis 15 mm und eine Länge von 8 bis 20 mm aufweisen und am Kopfende einen größeren Durchmesser als am Fuß besitzen, um eine Hinterschneidung zu erzielen. Grundsätzlich sind diese Noppenformen bekannt. Der Abstand der einzelnen Noppen beträgt etwa 1,5 bis 4 cm voneinander, so daß auf 1 m etwa 500 bis 5000 Noppen kommen.

Die Noppen dienen zum einen als Abstandshalter zum Preliner, so daß nach dem Einbringen des Inliners in den Preliner ein Ringraum zwischen dem Preliner und dem eigentlichen Inliner freigehalten wird. In diesen Ringraum ragen dann die einzelnen Noppen. Der Ringraum wird mit einer aushärtbaren Masse, z. B. einem Kunstharz, ausgefüllt. Die Masse wird anschließend ausgehärtet. Bevorzugt wird als aushärtbare Masse ein dünnflüssiger Mörtel (Dämmer) verwendet.

Nach dem Ausfüllen und Aushärten dieses Ringraumes mit z. B. einem Mörtel bilden die Noppen mit ihren Hinterschneidungen gleichzeitig Verankerungselemente, die den Inliner an dem ausgehärteten Mörtel befestigen. Der ausgehärtete Mörtel (Dämmer) bildet dabei ein starres (neues) Rohr, das von außen durch den Preliner isoliert und von innen mit dem Inliner ausgekleidet ist.

Bei einer eventuellen späteren Beschädigung des Preliners und bei einem Wassereinbruch von außen (Grundwasser) muß damit gerechnet werden, daß Wasser zwischen die ausgehärtete Mörtelschicht und den inneren Inliner gelangt. Dennoch wird der relativ flexible Inliner dabei nicht eingedrückt, d. h. er beult nicht ein, da die Noppen von dem ausgehärteten Mörtel gehalten werden. Je nach Noppengeometrie können dabei Außendrücke von bis zu 3 bar bewältigt werden, bevor die Noppen aus der Rohrschale gezogen werden.

Bei einer bevorzugten Ausführungsform der Erfindung wird zwischen dem zweiten schlauchförmigen thermoplastischen Inliner (Preliner, mittlerer Inliner) und der zu sanierenden Transportleitung (Kanalrohrleitung) ein dritter (äußerer) schlauchförmiger thermoplastischer Inliner vorgesehen, wobei der dritte (äußere) Inliner auf seiner Innenseite oder der zweite (mittlere) Inliner (Preliner) auf seiner Außenseite Mittel, z. B. Noppen, zur Fixierung eines Abstandes zwischen dem zweiten (mittleren) Inliner und dem dritten (äußeren) Inliner aufweist, wodurch ein freier Ringraum zwischen dem zweiten und dem dritten Inliner gebildet wird als Kontrollraum zur Feststellung und ggf. Beseitigung von Undichtigkeiten in einem der Inliner (dreischaliges System).

Die Noppen auf der Außenseite des mittleren Inliners oder der Innenseite des außeren Inliners (dritten Inliner) sind bevorzugt 0,5 bis 2 mm dick mit einem Durchmesser von ca. 3 bis 30 mm und einem mittleren Abstand von 3 bis 40 mm. Die Abmessungen dieser Noppen sind unkritisch, da sie lediglich zur Aufrechterhaltung eines freien Fließquerschnitts dienen.

Nach einer weiteren bevorzugten Ausführungsform der Erfindung ist in einem der verwendeten Inliner (äußerer Inliner, mittlerer Inliner, innerer Inliner) eine Metallfolie, z. B. aus Aluminium, eingebettet. Diese Sperrfolie dient als zuverlässige Sperre gegen Permeation bzw. Diffusion von chlorierten Kohlenwasserstoffen etc., die das thermoplastische Material der Inliner durchdringen können. Bevorzugt wird die Sperrfolie bei einer zweischaligen Ausführung (Preliner und innerer Inliner) in den Preliner und bei der dreischaligen Ausführung (äußerer, mittlerer und innerer Inliner) in den mittleren Inliner integriert.

Als thermoplastischer Kunststoff für die verwendeten Inliner wird bevorzugt HDPE (Polyethylen mit hoher Dichte) und/oder VLDPE (Polyethylen mit sehr geringer Dichte [ρ] ; ρ kleiner 0,915 g/cm³, bevorzugt ρ kleiner 0,905 g/cm³) eingesetzt, wobei der E-Modul (Härte) des Materials nach DIN 53 457 (Messung der Tangentensteigung (Modul) bei 0,5 % Dehnung, Dehnungsgeschwindigkeit 1 %/min, Temperatur 23 °C) bevorzugt 30 bis 900 N/mm, insbesondere 100 bis 600 N/mm beträgt.

Bevorzugt wird jedoch kein reines VLDPE, sondern eine Mischung mit bis zu 75 Gew.-% HDPE eingesetzt. Hierdurch wird die mechanische Festigkeit erheblich gesteigert, ohne die Flexibilität zu sehr zu beeinträchtigen.

Besonders bewährt hat sich der Einsatz eines HDPE (Polyethylen hoher Dichte; 0,93 < ρ < 0,95 g/cm³) mit geringem E-Modul nach DIN 53 457 im Bereich bis 900 N/mm, bevorzugt bis 600 N/mm. Mischungen von 30 bis 70 Gew.-% VLDPE und 70 bis 30 Gew.-% HDPE werden besonders bevorzugt, wobei der E-Modul nach DIN 53 457 der Mischung bei mittlerem Nenndurchmesser des Inliners bevorzugt 50 bis 500 N/mm, insbesondere 150 bis 300 N/mm, beträgt. Bevorzugt beträgt der Sekantenmodul des Materials (Sekantensteigung im Intervall von 1% bis 2% Dehnung im Spannungs-Dehnungs-Diagramm, gemessen nach DIN 53 457/ISO 527, Dehnungsgeschwindigkeit 1%/min, Temperatur 23 °C) zwischen 40 und 400 N/mm, insbesondere 75 bis 230 N/mm.

Bei kleineren Nenndurchmessern sollte eine höhere Flexibilität (kleinerer E-Modul) angestrebt werden, während bei größeren Nenndurchmessern ein höherer E-Modul (höhere Steifigkeit) bevorzugt wird. Das Verhältnis von E-Modul zu Nenndurchmesser sollte bevorzugt 0,2 bis 2,5 N/mm³, insbesondere 0,3 bis 1,5 N/mm³ betragen.

Es hat sich überraschend herausgestellt, daß das verwendete VLDPE und insbesondere die bevorzugten Mischungen aus HDPE und VLDPE eine ausgezeichnete Chemikalienbeständigkeit gegen nahezu alle in Frage kommenden Medien aufweisen, die z. T. wesentlich über der von LDPE liegt.

Nach einer bevorzugten Ausführung der Erfindung wird dem thermoplastischen Kunststoff für den inneren Inliner ein hellfarbiges Pigment beigemischt, um einen Inliner mit heller Farbe zu erhalten. Als Maß für den "Helligkeitsgrad" bzw. "globalen Refexionsgrad" wird bei einer mattierten Probe nach DIN 5033, Teil 4 (Spektralverfahren, Lichtart C, 2° Beobachtungswinkel, Geometrie 0°/45°) der sog. L-Wert bestimmt. Ein L-Wert von 100 bedeutet, daß 100 % des auftreffenden Lichtes (diffus) reflektiert werden (ideales Weiß). Der erfindungsgemäße Inliner weist hiernach bevorzugt einen globalen Reflexionsgrad von > 30%, bevorzugt > 60 % (L-Wert > 30 bzw. > 60) auf. Hierdurch wird eine spätere Kontrolle des sanierten Kanals mit einer Videokamera wesentlich erleichtert.

Nach einer alternativen Ausführung der Erfindung werden dem thermoplastischen Kunststoff für den inneren Inliner keine Farbpigmente und kein Ruß beigemischt, um einen transparenten oder transluzenten Inliner zu erhalten. Als Maß für die "globale Lichtdurchlässigkeit" wird gemessen, welcher Anteil des senkrecht auftreffenden Lichts (380 - 780 nm) die Probe durchdringt (einschließlich des gestreuten Anteils). Die globale Lichtdurchlässigkeit des Inliners nach dieser Ausführungsform der Erfindung beträgt > 30 %, bevorzugt > 50 %. Hierdurch wird eine spätere Kontrolle des den Inliner umgebenden Mörtels, z. B. auf Vorhandensein größerer Lunker, Luftblasen oder Risse, ermöglicht.

Zur Herstellung der erfindungsgemäßen schlauchförmigen Inliner wird eine Bahn aus entsprechendem thermoplastischem Kunststoff in an sich bekannter Weise zu einem Schlauch geformt, wobei ein Seitenstreifen von z. B. 3 bis 10 cm Breite, bevorzugt etwa 4,5 cm Breite, von dem hierzu parallelen anderen Seitenstreifen überlappt wird. Im Uberlappungsbereich werden die Seitenstreifen - bevorzugt mit einer Doppelnaht - thermisch verschweißt. Der zwischen den Doppelnähten gebildete Prüfkanal dient zur Dichtigkeitsprüfung der Schweißnähte.

Für die Herstellung der homogenen noppenbesetzten Inliner wird entsprechend eine - aus anderen Materialien an sich bekannte - Noppenbahn aus - bevorzugt flexiblem - thermoplastischem Material verwendet, wobei ein nicht mit Noppen besetzter Seitenstreifen von z. B. 3 bis 10 cm Breite, bevorzugt etwa 4,5 cm Breite, von dem hierzu parallelen anderen Seitenstreifen überlappt wird. Im Überlappungsbereich werden die Seitenstreifen - bevorzugt mit einer Doppelnaht - thermisch verschweißt. Die Schweißnaht verläuft dabei etwa parallel zur Längsachse des Inliners.

Besonders vorteilhaft ist es, wenn im Bereich der Doppelnaht zwischen den beiden Nähten wenigstens eine Reihe von Noppen angeordnet ist. Die Anzahl der Noppen (Abstandshalter bzw. Verankerungselemente) je m sollte im Bereich der Naht etwa derjenigen im Bereich der übrigen Bahn entsprechen. Hierzu sind die Noppen in ggf. versetzt zueinander stehenden Reihen parallel zueinander und zur Längserstreckung der Bahn angeordnet, wobei zwischen je zwei benachbarten Noppenreihen ein für eine Schweißnaht ausreichend breiter Zwischenraum von ca. 0,5 bis 2 cm freibleibt. Dabei können für größere Durchmesser des zu sanierenden Rohres ggf. auch mehrere Noppenbahnen zu einem Inliner größeren Durchmessers miteinander verbunden werden.

Nach diesen Verfahren können die Inliner für verschiedene Kanaldurchmesser im Bedarfsfall quasi maßgeschneidert werden.

Grundsätzlich können die erfindungsgemäßen Inliner auf Grund ihrer hohen Flexibilität nach dem sogenannten Umstülpverfahren in den zu sanierenden Kanalabschnitt eingebracht werden. Bevorzugt werden die Inliner jedoch von einem im allgemeinen bereits vorhandenen Kanalschacht (Standard-Schachtbauwerk) bis zum nächsten vorhandenen Kanalschacht gezogen, wobei auch Zwischenschächte überbrückt werden können. Hierzu kann der Inliner etwa U- oder S-förmig gefaltet und schlaff auch über relativ kleine Biegeradien gezogen werden.

Bevorzugt werden die werksseitig vorkonfektionierten Inliner auf einer Trommel am Schachtbauwerk aufgeständert. Durch eine über der Einsteigöffnung positionierte Verformungseinheit wird der Inliner während des Einziehvorganges etwa U-förmig gefaltet, so daß sich gegenüber dem Originalzustand eine Querschnittsreduzierung von ca. 50 % mit entsprechendem Steifigkeitsverlust ergibt. Diese ermöglicht es, bequem innerhalb des Schachtbauwerkes, z. B. mit Hilfe eines eingebrachten Rohrbogens aus PE, den Inliner um 90° umzulenken und in die Kanalhaltung einzuführen. Vom jeweiligen Endschacht der zu sanierenden Haltung aus werden die einzelnen Inliner nun ebenfalls über eine Umlenkvorrichtung eingezogen.

Von besonderem Vorteil ist es dabei, daß die Inliner vor dem Einziehen in die Kanalrohrleitung nicht erwärmt zu werden brauchen, d. h., daß sie bei Umgebungstemperatur eingebracht werden können.

Bei der Ausführungsform mit zwei Inlinern (zweischaliges System), d. h. ohne Kontrollraum, wird nach diesem Verfahren zunächst der äußere Inliner (Preliner) in den zu sanierenden Kanal eingezogen. Anschließend wird der innere, auf seiner Außenseite mit Noppen versehene Inliner in den Preliner (äußeren Inliner) eingezogen.

Bei der Ausführungsform mit drei Inlinern (dreischaliges System), d. h. mit Kontrollraum, wird zunächst der äußere Inliner in den zu sanierenden Kanal eingezogen. Soweit dabei der äußere Inliner Noppen aufweist, werden diese nach innen angeordnet. Anschließend wird der mittlere Inliner, ggf. mit den Noppen nach außen, in den äußeren Inliner, und danach der innere, auf seiner Außenseite mit Noppen versehene Inliner in den mittleren Inliner eingezogen.

Auf diese Weise entsteht ein zwei- oder dreischaliges System von Inlinern, das selbstverständlich bei Bedarf mit weiteren Schichten (Inlinern) ergänzt werden kann, soweit die damit verbundene Querschnittsreduzierung in Kauf genommen werden kann.

Nach Möglichkeit sollten die Schweißnähte jeweils im Scheitelbereich des Kanalrohres angeordnet werden.

Bei der Ausführungsform mit zwei Inlinern (zweischaliges System), d. h. ohne Kontrollraum, wird nach dem Einziehen der beiden Inliner der Ringraum zwischen dem äußeren Inliner (Preliner) und dem inneren, auf seiner Außenseite mit Noppen versehenen Inliner mit z. B. einem dünnflüssigen Mörtel (Dämmer) verfüllt. Grundsätzlich kann der Mörtel zwar schon während des Einziehens des inneren Inliners in den Kanal mit eingebracht werden, bevorzugt wird der Mörtel aber erst anschließend in an sich bekannter Weise eingefüllt. Zuvor werden die Inliner an beiden Enden im Bereich der Schachtbauwerke an der Innenwandung des zu sanierenden Kanals fixiert und abgedichtet. Anschließend wird der innere Inliner von innen mit einem Fluid (Luft oder bevorzugt Wasser) bei einem Überdruck von 0,2 bis 1 bar, bevorzugt ca. 0,5 bar beaufschlagt. Hierbei legen sich die Inliner an die Kanalinnenwandung an, wobei durch die Noppen des inneren Inliners ein gleichförmiger Ringraum freigehalten wird.

Bei dem Vermörteln wird der Ringraum vollständig mit dem dünnflüssigen Mörtel ausgefüllt. Ggf. kann durch Temperieren des Fluids im Inneren des Inliners die Aushärtung des Mörtels verzögert oder beschleunigt werden. Durch die Verwendung eines hochfesten Mörtels bildet der verfüllte Ringraum eine tragende Schale und gewährleistet somit gleichzeitig die Statik des Inliners. Bereits nach 12 h Aushärtezeit werden bei einer Nennweite DN 800 alle Spannungsnachweise, die an selbsttragende Auskleidungen gemäß IfBT ("Richtlinie für Auswahl und Anwendung von Innenauskleidungen mit Kunststoffbauteilen für Misch- und Schmutzwasserkanäle, Anforderungen und Prüfungen, 09.82") und ATV A 127 ("Richtlinie für die statische Berechnung um Entwässerungskanälen und Leitungen") gestellt werden, erfüllt.

Soweit an die sanierte Rohrleitung besonders hohe mechanische Anforderungen (Statik) gestellt werden, können auch zwei auf der Außenseite mit Noppen versehene innere Inliner verwendet werden, wobei beide entstehenden Ringräume mit z. B. Mörtel ausgefüllt werden.

Bei der Ausführungsform mit drei Inlinern (dreischaliges System), d. h. mit Kontrollraum, wird der Ringraum zwischen dem inneren Inliner und dem mittleren Inliner ähnlich dem vorstehend beschriebenen Verfahren mit zweischaligem Aufbau mit Mörtel verfüllt. Bei diesem dreischaligen System bildet der Ringraum zwischen dem äußeren Inliner und dem mittleren Inliner einen Kontrollraum, so daß nach der Sanierung oder später durch an sich bekannte Maßnahmen wie Anlegen eines Über- oder Unterdrucks, Absaugen oder Auffangen von in den Prüfraum eingedrungener Flüssigkeit mit einem dünnen Prüfschlauch, Messung des elektrischen Widerstandes durch eine Prüfsonde etc. eine Leckage festgestellt werden kann. Ggf. kann eine so geortete Leckage auch in an sich bekannter Weise durch Injektion eines aushärtenden und/oder quellfähigen Mittels in den Kontroll-Ringraum abgedichtet werden.

Nach einer weiteren Ausführungsform der Erfindung mit wenigstens dreischaligem Aufbau wird zwischen zwei äußere Inliner ein mit einem quellfähigen Mittel gefülltes Textil o. dgl., insbesondere ein sog. Geotextil, angeordnet, um eine selbstdichtende Funktion zu erreichen. Als quellfähiges Mittel wird z. B. Bentonit verwendet. Die Dicke des gefüllten Textils beträgt bevorzugt ca. 3 - 5 mm.

Das erfindungsgemäße Relining-System vereint in bisher nicht bekanntem Maße z. T. so widersprüchliche Eigenschaften wie:
- hohe Flexibilität zum leichteren Einbringen des Inliners durch vorhandene Schachtbauwerke,
- hohe Chemikalienbeständigkeit gegen aggressive Medien,
- absolute Dichtigkeit gegen Exfiltration und Infiltration,
- hohe Eigenstabilität und mechanische Festigkeit, z. B. bei mechanischer Beanspruchung von außen (Erdbewegungen) und späterer Hochdruck-Wasserstrahl-Reinigung von innen,
- lange Betriebsdauer,
- Verwendbarkeit auch bei nicht begehbaren Kanalrohrleitungen,
- Verwendbarkeit auch bei unrunden Kanalquerschnitten, bei Rohrbögen etc. sowie bei stark beschädigten Kanälen mit Wassereinbruch von außen,
- geringer Energieverbrauch und Aufwand beim Verlegen,
- geringer Querschnittsverlust,
- Inkrustationssicherheit,
- günstige Kosten.

Bei dem bevorzugten dreischaligen System wird darüber hinaus
- eine Kontrollierbarkeit der Dichtigkeit sowie
- eine Sanierbarkeit
   erreicht.

Die Erfindung wird nachfolgend anhand eines Ausführungsbeispiels sowie der Zeichnungen näher erläutert.

Es zeigen dabei
- Fig. 1: eine Noppenbahn zur Herstellung des inneren Inliners;
- Fig. 2: einen inneren Inliner gemäß der Erfindung;
- Fig. 3: Einzelheit X gemäß Fig. 2 (Schweißnaht);
- Fig. 4: einen zu sanierenden Kanal mit Preliner und innerem Inliner (Querschnitt);
- Fig. 5: einen Längsschnitt eines zu sanierenden Kanals beim Einziehen der Inliner;
- Fig. 6: einen Längsschnitt durch einen zu sanierenden Kanal bei der Ringraumverfüllung;
- Fig. 7: einen Querschnitt durch den sanierten Kanal (Ausschnitt zweischaliges System);
- Fig. 8: einen Querschnitt durch den sanierten Kanal (Ausschnitt dreischaliges System);

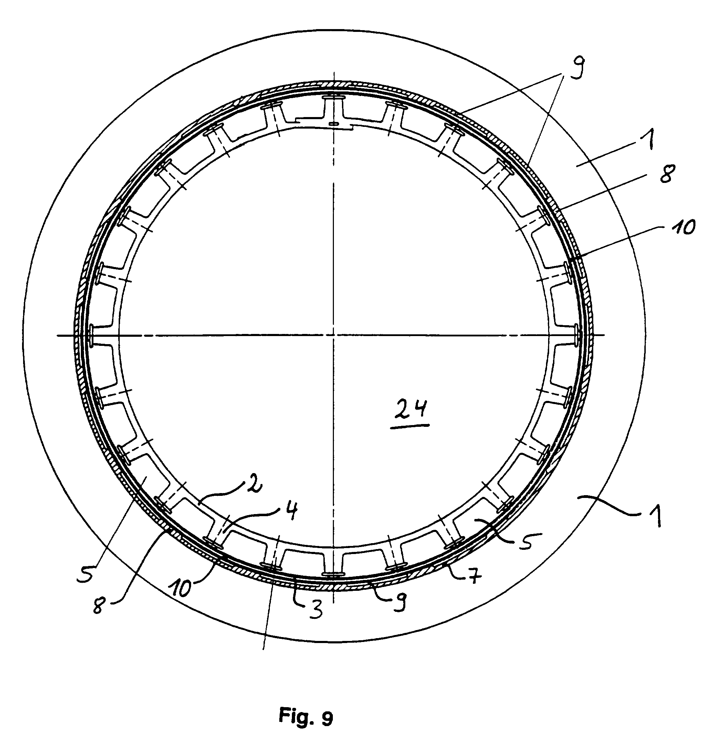

- Fig. 9: einen Querschnitt durch den zu sanierenden Kanal vor der Ringraumverfüllung;
- Fig. 10: den Anschluß des Inliners am Kanalende (dreischichtiges System).

### Beispiel 1

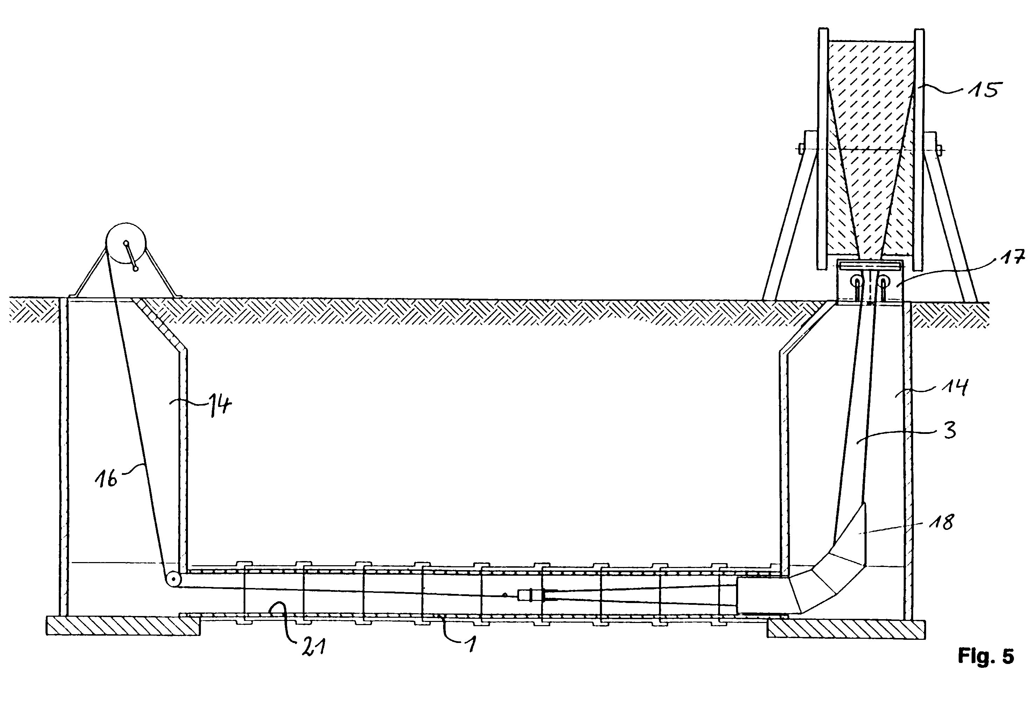

Ein Kanal 1 mit Nenndurchmesser 300 mm (DN 300) soll mit dem zweischaligen System (ohne Kontrollraum) saniert werden. Der Kanal 1 weist im Abstand von je 60 m Standard-Schachtbauwerke 14 auf (Fig. 5).

Zur Herstellung eines Preliners 3 wird ein Ansatz bestehend aus
- 72 Gew.-% VLDPE: (Norsoflex ® LW 1910; Fa. EniChem; E-Modul 65 N/mm)
- 25 Gew.-% HDPE: (Vestolen ® A 3512 Natur; Fa. Hüls AG; E-Modul 590 N/mm)
- 2 Gew.-%: (Weißpigment PMM 869, Fa. Polyplast Müller)
- 1 Gew.-% HDPE: (Vestolen ® A 3512 R, Fa. Hüls AG; rußhaltig)
in einem dem Fachmann bekannten Einschneckenextruder homogenisiert und zu einer Flachfolie einer Breite von ca. 1 m und einer Dicke von 2,5 mm extrudiert. Nach beidseitiger Besäumung der Bahn auf 985 mm Breite wird diese in einem zweiten Arbeitsschritt zu dem Preliner 3 mit einem äußeren Durchmesser von 300 mm geformt, wobei im Überlappungsbereich durch thermisches Verschweißen eine Doppelnaht mit dazwischenliegendem Prüfkanal erzeugt wird. Das Material des Preliners 3 weist einen E-Modul von 150 N/mm auf. Das Verhältnis von E-Modul zu Nenndurchmesser ("relative Steifigkeit") beträgt somit 0,5 N/mm³.

Zur Herstellung des inneren Inliners 2 wird folgender Ansatz verwendet:
- 50 Gew.-% VLDPE: (Norsoflex ® LW 1910; Fa. EniChem; E-Modul 65 N/mm)
- 50 Gew.-% HDPE: (Vestolen ® A 3512 Natur; Fa. Hüls AG; E-Modul 590 N/mm).

Dieser Ansatz wird in einem Einschneckenextruder homogenisiert und auf ein Walzwerk mit einer ersten Walze, die leicht konische Bohrungen aufweist, und einer zweiten Walze aufextrudiert. In dem Walzenspalt wird das thermoplastische Material in die leicht konischen Bohrungen eingedrückt. Nach Abziehen der Bahn von der Walze erhält man eine mit Noppen versehene Abdichtungsbahn 13. Die Noppen mit einer anfänglichen Länge von 13 mm werden anschließend mit Hilfe eines zweiten Walzwerkes mit einer Stahlwalze und einer Gummiwalze mit einer Spaltweite von 12 mm am Kopf gestaucht, so daß die einzelnen, auf eine Länge von ca. 10 mm gestauchten Noppen 4 entsprechende Hinterschneidungen 11 aufweisen. Im dargestellten Ausführungsbeispiel ist die Abdichtungsbahn 13 3 mm dick. Die Noppen 4 haben eine Länge von 10 mm, einen Durchmesser am Fuß von 5 mm und am Kopf von 8 mm.

Der transluzente (opake) innere Inliner 2 mit einer globalen Lichtdurchlässigkeit von 53 % weist einen E-Modul von 260 N/mm auf, so daß sich eine auf den Nenndurchmesser von 300 mm bezogene relative Steifigkeit von 0,86 N/mm³ ergibt.

Preliner 3 und innerer Inliner 2 werden auf eine Länge von z. B. 60 m abgelängt, auf Dichtigkeit geprüft und auf einer Kabeltrommel an die Baustelle transportiert. In Fig. 5 ist das Einziehen des Preliners 3 in den zu sanierenden Kanal 1 näher dargestellt. Der Preliner 3 wird dabei von dem Standard-Schachtbauwerk 14 in den Kanal 1 eingezogen. Hierzu wird mit Hilfe der Vorrichtung 15 der Preliner 3 zunächst etwa U-förmig gefaltet und mit Hilfe des Seiles 16 über die Rollenführung 17 und die Umlenkeinrichtung 18 in den Kanal 1 gefädelt.

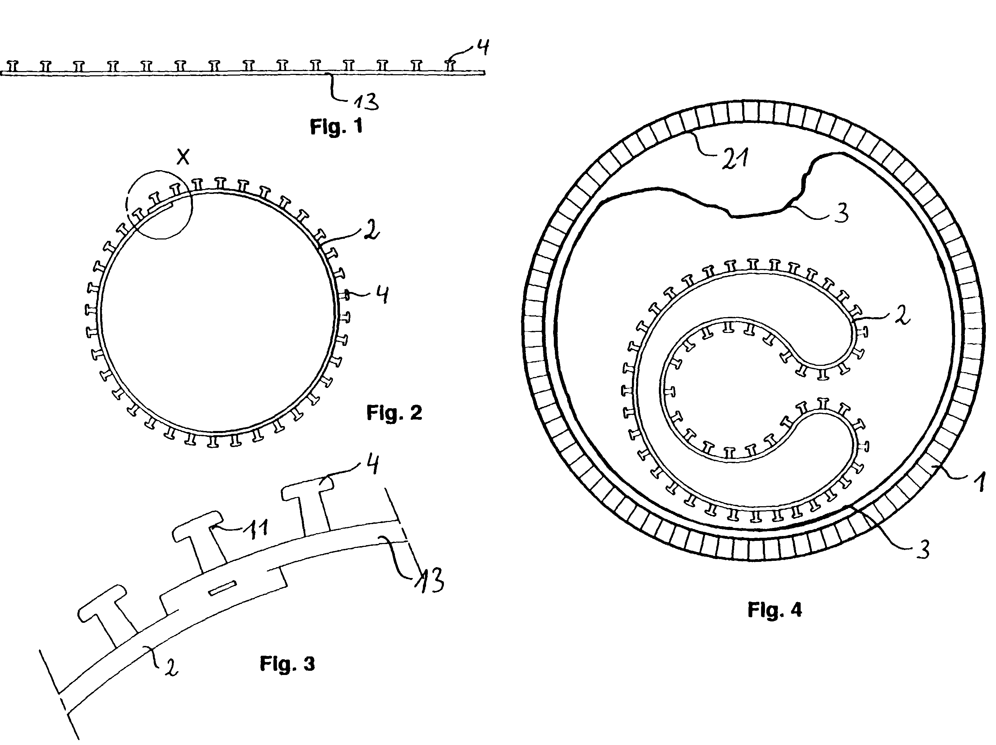

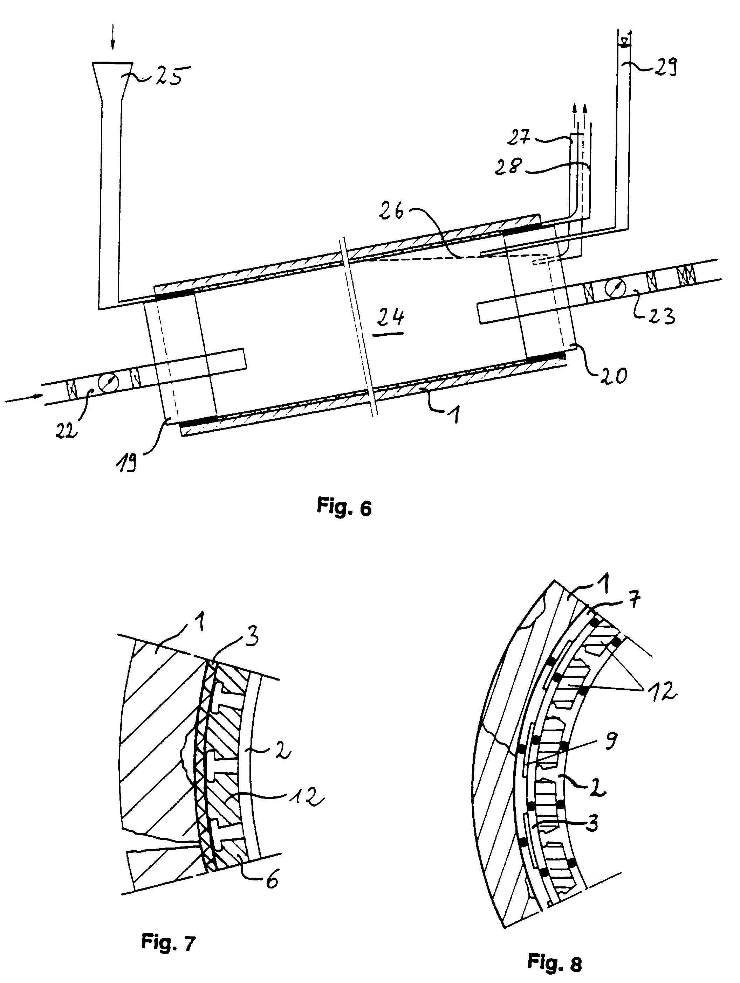

Nach dem Einziehen des Preliners 3 wird der innere Inliner 2 in gleicher Weise in den Preliner 3 eingezogen (Fig. 4). Anschließend werden an beiden Enden des inneren Inliners 2 auf einer Länge von 10 cm die Noppen 4 entfernt. Diese noppenfreien Enden 31 des Inliners 2 werden an beiden Enden mit Hilfe von Absperrblasen 19 und 20 an die Kanalinnenwandung 21 angepreßt und In diesem Bereich abgedichtet. Einfüllöffnungen 22 und Ablaßöffnungen 23 ermöglichen das Einfüllen und Abführen von (ggf. temperiertem) Wasser 24 unter definiertem Druck. Gleichzeitig kann durch Messung eines evtl. Druckabfalls eine Undichtigkeit rechtzeitig festgestellt werden. Durch den Wasser-Innendruck von ca. 0,5 bar wird der innere Inliner 2 an den Preliner 3 und dieser an die Innenwandung 21 des Kanals 1 angepreßt, wobei die Noppen 4 einen definierten Ringraum 5 zwischen der Abdichtungsbahn 13 und dem Preliner 3 fixieren. In diesen Ringraum 5 wird durch den Einfülltrichter 25 ein dünnflüssiger Mörtel 6 (Fabrikat HC/HT Relining-Injektor, Firma Hüls Troisdorf AG) eingefüllt. Im dargestellten Beispiel wird der Mörtel 6 vom Scheitelpunkt der tiefsten Stelle der Kanalhaltung aus mit geringem Druck eingefüllt, wobei sich der Mörtel 6 durch die Schwerkraft in dem Ringraum 5 des leicht ansteigenden Kanals 1 entsprechend verteilt. In Fig. 6 ist der momentan erreichte Mörtel-Spiegel 26 eingezeichnet. Ggf. kann durch Entlüftungsleitungen 27 und 28 Luft aus dem Ringraum 5 entweichen, wobei gleichzeitig eine Kontrolle des erreichten Mörtel-Spiegels 26 ermöglicht wird. Beim Einfüllen des Mörtels 6 kann der Innendruck im inneren Inliner 2 u. U. ansteigen, was mit Hilfe des Überlaufs 29 kontrolliert und ausgeglichen werden kann.

Nach vollständiger Vermörtelung härtet der Mörtel 6 innerhalb von ca. 7 h aus, wobei die Härtezeit ggf. durch Temperieren des Wassers 24 beschleunigt oder verlangsamt werden kann.

Nach Aushärtung bildet der Mörtel 6 ein starres selbsttragendes Rohr, das innen durch den inneren Inliner 2 und von außen durch den Preliner 3 gegen Korrosion zuverlässig geschützt ist. Die Noppen 4 stellen dabei eine Verankerung der Noppenbahn in dem Mörtelrohr dar.

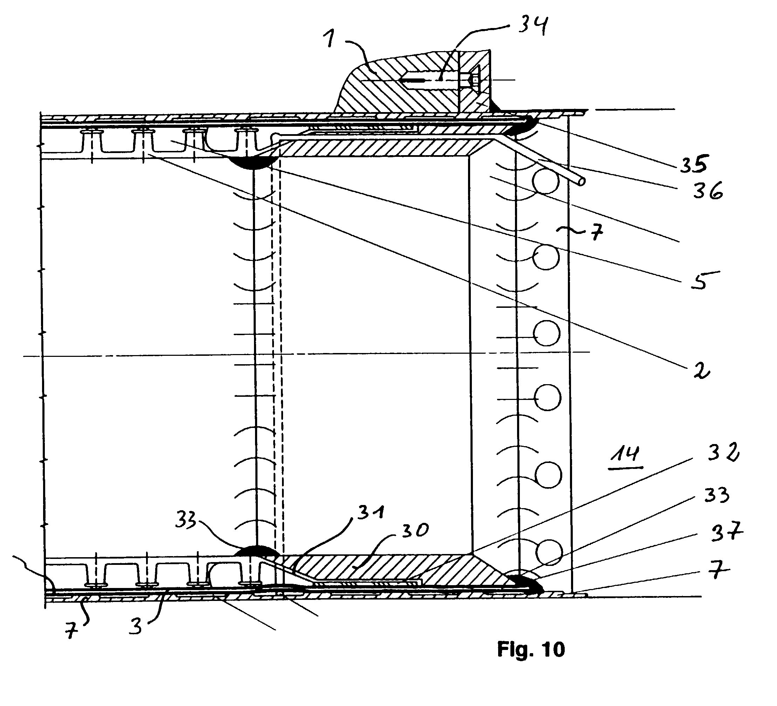

Abschließend wird der Inliner 2 an beiden Enden, wie in Fig. 10 dargestellt, an die Schachtbauwerke 14 angeschlossen. Hierzu wird ein statisch selbsttragender, steifer Ring 30 aus HDPE von den Schachtbauwerken 14 aus in das Kanalende eingeschoben, wobei die noppenfreien Enden 31 des Inliners 2 zwischen dem HDPE-Ring 30 und der Kanalinnenwandung 21 eingeklemmt werden. Ggf. kann zusätzlich noch eine Dichtung 32 zwischen der Außenseite des noppenfreien Endes 31 des Inliners 2 und der Kanalinnenwandung 21 vorgesehen werden. Nach dem Einbringen der HDPE-Ringe 30 werden diese mit dem Inliner 2 verschweißt (Schweißnaht 33). Eine von dem Schachtbauwerk 14 von innen mit Dübeln 34 an der oberen Hälfte des Kanalrohres 1 befestigte halbkreis-bogenförmige Platte 35 aus HDPE wird abschließend mit dem Ring 30 verschweißt.

Durch die Verwendung eines nahezu transparenten Inliners 2 ist eine zuverlässige TV-Kontrolle des mit Mörtel 6 verfüllten Ringraumes 5 möglich, so daß z. B. größere Luftblasen rechtzeitig entdeckt werden können.

### Beispiel 2

Ein Kanal 1 mit Nenndurchmesser 300 mm (DN 300) soll mit einem dreischaligen System mit Kontrollraum 9 saniert werden. Der Kanal 1 weist im Abstand von je 60 m Schachtbauwerke 14 auf.

Hierzu wird zunächst ähnlich Beispiel 1 ein äußerer Inliner 7, ein mittlerer Inliner 3 und ein innerer Inliner 2 hergestellt. Der äußere Inliner 7 weist dabei auf seiner Innenseite kleine Noppen 8 mit einer Höhe von 1 mm und einem Durchmesser von 8 mm auf. In den mittleren Inliner 3 ist eine Aluminiumfolie 10 als Permeationssperre integriert.

In Fig. 8 ist ein Querschnitt eines entsprechend sanierten Rohres dargestellt. Zwischen dem äußeren Inliner 7 und dem mittleren Inliner 3 wird ein Kontrollraum 9 (äußerer Ringraum) durch die Noppen 8 fixiert.

Bei dem Anschluß des Systems an die Schachtbauwerke 14 entsprechend Fig. 10 wird zusätzlich zu Beispiel 1 ein Kontrollschlauch 36 zwischen dem äußeren Inliner 7 und mittleren Inliner 3 vorgesehen. Wie in Fig. 10 dargestellt, wird zusätzlich am Inlinerende, d. h. am Schachtbauwerk 14, der mittlere Inliner 3 mit dem äußeren Inliner 7 verschweißt (Schweißnaht 37). Als weitere Abdichtung zwischen den Inliner-Enden 31 und dem mittleren Inliner 3 dient ein Dichtungsband 32 aus Butyl-Kautschuk (doppelseitiges Klebeband).

## Patentansprüche

1. System zum Relining von Transportleitungen wie Kanalrohrleitungen (1)
- mit einem inneren schlauchförmigen thermoplastischen Inliner (2),
- einem zweiten schlauchförmigen thermoplastischen Inliner - im folgenden Preliner (3) bezeichnet -, der in die zu sanierende Kanalrohrleitung (1) eingebracht wird,
- wobei der innere Inliner (2) in den Preliner (3) eingebracht wird und auf seiner Außenseite Mittel (4) aufweist, die sowohl zur Fixierung eines definierten Abstandes und damit zur Bildung eines Ringraumes (5) zwischen dem inneren Inliner (2) und dem Preliner (3) als auch zur formschlüssigen Verankerung des inneren Inliners (2) in einer in den Ringraum (5) einzubringenden aushärtbaren Masse (6) dienen.

2. System nach Anspruch 1, ***dadurch gekennzeichnet****,* daß zwischen dem schlauchförmigen thermoplastischen Preliner (3) und der zu sanierenden Transportleitung (1) ein dritter schlauchförmiger thermoplastischer Inliner (7) vorgesehen ist, wobei der dritte Inliner (7) auf seiner Innenseite oder der Preliner (3) auf seiner Außenseite Mittel (8) zur Fixierung eines Abstandes zwischen dem Preliner (3) und dem dritten Inliner (7) aufweist, wodurch ein freier Ringraum (9) zwischen dem Preliner (3) und dem dritten Inliner (7) gebildet wird als Kontrollraum zur Feststellung und ggf. Beseitigung von Undichtigkeiten in einem der Inliner.

3. System nach einem der Ansprüche 1 oder 2, ***gekennzeichnet durch*** eine Metallfolie (10) als Diffusions- bzw. Permeationssperre für chlorierte Kohlenwasserstoffe etc. in einem der Inliner.

4. System nach einem der Ansprüche 1 bis 3, ***dadurch gekennzeichnet****,* daß als Mittel zur Fixierung eines definierten Abstandes zwischen dem inneren Inliner (2) und dem Preliner (3) Noppen (4) vorgesehen sind, wobei die Noppen (4) Hinterschneidungen (11) aufweisen und einstückig mit dem inneren Inliner (2) verbunden sind.

5. System nach einem der Ansprüche 1 bis 4, ***dadurch gekennzeichnet****,* daß der innere Inliner (2) zu
25 bis 100 Gew.-% aus VLDPE mit einem E-Modul von 30-300 N/mm,
0 bis 75 Gew.-% aus HDPE,
0 bis 5 Gew.-% aus Füllstoffen, Pigmenten oder Hilfsstoffen,
0 bis 5 Gew.-% aus anderen Polymeren
besteht und daß der innere Inliner (2) einen E-Modul von 50-500 N/mm aufweist.

6. System nach einem der Ansprüche 1 bis 5, **gekennzeichnet durch** ein Verhältnis von E-Modul zu Nenndurchmesser des inneren Inliners (2) von 0,25 - 1 N/mm³.

7. System nach einem der Ansprüche 4 bis 6, **dadurch gekennzeichnet**, daß der innere Inliner (2) eine Wanddicke von 1,5 - 5 mm, einen mittleren Noppendurchmesser von 5 - 15 mm und eine Noppenlänge von 8 - 20 mm aufweist.

8. Verfahren zum Relining von Transportleitungen wie Kanalrohrleitungen (1), bei dem
- zunächst ein äußerer schlauchförmiger thermoplastischer Inliner - im folgenden Preliner (3) bezeichnet - in die zu sanierende Kanalrohrleitung (1) und
- anschließend in den Preliner (3) ein innerer schlauchförmiger thermoplastischer Inliner (2) eingebracht wird, wobei
- der innere Inliner (2) auf seiner Außenseite Mittel (4) zur Fixierung eines definierten Abstandes und damit zur Bildung eines Ringraumes (5) zwischen dem inneren Inliner (2) und dem Preliner (3) aufweist,
- anschließend der Ringraum (5) zwischen dem Preliner (3) und dem inneren Inliner (2) mit einer aushärtbaren Masse (6) ausgefüllt wird,
- worauf die aushärtbare Masse ausgehärtet wird zu einer starren Rohrschale (12), in der die Mittel (4) zur Fixierung eines definierten Abstandes zwischen dem inneren Inliner (2) und dem Preliner (3) formschlüssig verankert sind.

9. Verfahren nach Anspruch 8, **dadurch gekennzeichnet**,
- daß vor dem Einbringen des Preliners (3) ein weiterer schlauchförmiger thermoplastischer Inliner (7) in die zu sanierende Kanalrohrleitung (1) eingebracht wird, und
- daß der weitere Inliner (7) auf seiner Innenseite oder der Preliner (3) auf seiner Außenseite Mittel (8) zur Fixierung eines Abstandes zwischen dem Preliner (3) und dem weiteren thermoplastischen Inliner (7) aufweist, wodurch ein freier Ringraum (9) zwischen dem Preliner (3) und dem weiteren Inliner (7) gebildet wird als Kontrollraum zur Feststellung und ggf. Beseitigung von Undichtigkeiten in einem der Inliner.

10. Verfahren nach einem der Ansprüche 8 oder 9, **dadurch gekennzeichnet**, daß als aushärtbare Masse ein dünnflüssiger Mörtel (6) eingesetzt wird.

11. Verfahren nach einem der Ansprüche 9 oder 10, **gekennzeichnet durch** ein zwischen zwei äußeren Inlinern (3,7) angeordnetes, mit einem quellfähigen Mittel gefülltes Textil o. dgl. als selbstdichtende Schicht.

## Claims

1. System for relining conveyor ducts such as pipelines (1)
- having an inner tubular thermoplastic inliner (2),
- a second tubular thermoplastic inliner - termed hereinafter preliner (3) -, which is inserted into the pipeline to be restored,
- with the inner inliner (2) being inserted into the preliner (3) and having on its outside means (4) which serves both for fixing a defined clearance, and accordingly for formation of an annular chamber (5), between the internal inliner (2) and the preliner (3) and also for the form fitting anchoring of the internal inliner (2) in a hardenable composition to be introduced into the annular chamber (5).

2. System according to claim 1, **characterised in that** between the tubular thermoplastic preliner (3) and the conveyor duct (1) to be restored there is provided a third tubular thermoplastic inliner (7), with the third inliner (7) having on its inside or the preliner (3) having on its outside means (8) for securing a clearance between the preliner (3) and the third inliner (7), whereby a free annular chamber (9) is formed between the preliner (3) and the third inliner as control chamber for the identification and possible elimination of leaks in one of the inliners.

3. System according to one of claims 1 or 2, **characterised by** a metal foil (10) as diffusion or permeation barrier for chlorinated hydrocarbons etc in one of the inliners.

4. System according to one of claims 1 to 3, **characterised in that** knobs (4) are provided as means for fixing a defined distance between the inner inliner (2) and the preliner (3), with the knobs (4) having undercuts (11) and being connected in one piece with the inner inliner (2).

5. System according to one of claims 1 to 4, **characterised in that** the inner inliner (2) consists of
25 to 100% by wt. of VLDPE with an E-modulus of 30-300 N/mm,
0 to 75% by wt. of HDPE,
0 to 5% by wt. of fillers, pigments or auxiliary substances,
0 to 5% by wt. of other polymers
and that the inner inliner (2) has an E-modulus of 50-500 N/mm.

6. System according to one of claims 1 to 5, **characterised by** a ratio of E-modulus to nominal diameter of the inner inliner (2) of 0.25-1 N/mm³.

7. System according to one of claims 4 to 6, **characterised in that** the inner inliner (2) has a wall thickness of 1.5 - 5 mm, an average nominal diameter of 5 - 15 mm and a knob length of 8 - 20 mm.

8. Method for the relining of conveyor ducts like pipelines (1), in which
- firstly an outer tubular thermoplastic inliner - denoted as preliner (3) hereinafter - is inserted into the pipeline (1) to be restored and
- then an inner tubular thermoplastic inliner (2) is inserted into the preliner (3),
- with the inner inliner (2) having on its outside means (4) for securing a defined clearance and accordingly forming an annular chamber (5) between the inner inliner (2) and the preliner (3),
- then the annular chamber (5) between the preliner (3) and the inner inliner (2) is filled with a hardenable composition (6),
- whereupon the hardenable composition is hardened to a solid tubular shell (12), in which the means (4) for fixing a defined clearance between the inner inliner (2) and the preliner (3) is anchored form-fittingly.

9. Method according to claim 8, **characterised in that,**
- before the insertion of the preliner (3) a further tubular thermoplastic inliner (7) is inserted into the pipeline (1) to be restored and
- that the further inliner (7) has on its inside or the preliner (3) has on its outside means (8) for fixing a clearance between the preliner (3) and the further thermoplastic inliner (7), whereby a free annular chamber (9) is formed between the preliner (34) and the further inliner (7) as control chamber for detecting and possibly eliminating leaks in one of the inliners.

10. Method according to one of claims 8 or 9, **characterised in that** a free flowing mortar (6) is employed as hardenable composition.

11. Method according to one of claims 9 or 10, **characterised by** a textile filled with a settable medium, or the like, as self-sealing layer arranged between two outer inliners (3, 7).

## Revendications

1. Système pour le chemisage de canalisations, telles que des canalisations (1) d'assainissement,
- avec une gaine (2) intérieure thermoplastique sous forme de tuyau souple,
- une deuxième gaine thermoplastique sous forme de tuyau souple - nommée pré-gaine (3) dans ce qui suit - qui est mise en place dans la canalisation (1) à réhabiliter,
- la gaine (2) intérieure étant mise en place dans la gaine extérieure (pré-gaine 7) et présentant sur sa face extérieure des moyens (4) qui servent à la fois à fixer une distance donnée et ainsi à former un espace annulaire (5) entre la gaine intérieure (2) et la pré-gaine (3) et à ancrer par obstacles la gaine intérieure (2) dans une masse(6) durcissable introduite dans l'espace (5) annulaire.

2. Système selon la revendication 1, caractérisé par le fait qu'il est prévu entre la pré-gaine (3) thermoplastique sous forme de tuyau souple et la canalisation (1) à réhabiliter une troisième gaine (7) thermoplastique sous forme de tuyau souple, la troisième gaine (7) étant pourvue sur sa face extérieure ou la pré-gaine (3) étant pourvue sur sa face intérieure de moyens (8) pour fixer une distance entre la pré-gaine (3) et la troisième gaine (7), un espace (9) libre annulaire étant formé entre la pré-gaine (3) et la troisième gaine (7), en tant que chambre de contrôle pour détecter et le cas échéant éliminer des fuites dans l'une des gaines.

3. Système selon l'une des revendications 1 ou 2, caractérisé par le fait que l'une des gaines utilisées comporte une feuille métallique (10) en tant que barrière de diffusion et de perméation pour les hydrocarbures chlorés, etc. dans l'une des gaines.

4. Système selon l'une des revendications 1 à 3, caractérisé par le fait qu'il est prévu des boutons (4) comme moyen pour fixer une distance donnée entre la gaine (2) intérieure et la pré-gaine (3), les boutons (4) comportant des parties (11) en contre-dépouille et étant liés d'une pièce avec la gaine (2) intérieure.

5. Système selon l'une des revendications 1 à 4, caractérisé par le fait que la gaine (2) intérieure est composée
pour 25 à 100 % en poids, de polyéthylène à très basse densité (PEtbd) avec un module d'élasticité allant de 30 à 300 N/mm,
pour 0 à 75 % en poids, de polyéthylène à haute densité (PEhd),
pour 0 à 5 % en poids, de charges, de pigments ou d'adjuvants,
pour 0 à 5 % en poids, de polymères autres
et par le fait que la gaine (2) intérieure présente un module d'élasticité compris entre 50 et 500 N/mm.

6. Système selon l'une des revendications 1 à 5, caractérisé par un rapport du module d'élasticité au diamètre nominal de la gaine (2) intérieure compris entre 0,25 et 1 N/mm³.

7. Procédé selon l'une des revendications 4 à 6, caractérisé par le fait que la gaine (2) intérieure présente une épaisseur de paroi comprise entre 1,5 et 5 mm, un diamètre moyen de boutons compris entre 5 et 15 mm et une longueur de boutons comprise entre 8 et 20 mm.

8. Procédé pour le chemisage de canalisations telles que des canalisations (1) d'assainissement selon lequel
- on place dans la canalisation (1) à réhabiliter tout d'abord une gaine thermoplastique extérieure, sous forme de tuyau souple - nommée pré-gaine (3) dans ce qui suit -,
- puis, à l'intérieur de la pré-gaine (3), une gaine (2) intérieure thermoplastique sous forme de tuyau souple,
- la gaine (2) intérieure présentant sur sa face extérieure des moyens (4) qui servent à fixer une distance donnée et donc à former un espace annulaire (5) entre la gaine intérieure (2) et la pré-gaine (3),
- qu'ensuite on remplit l'espace (5) annulaire entre la pré-gaine (3) et la gaine (2) intérieure au moyen d'une masse (6) durcissable,
- on durcit la masse durcissable pour former une coque (12) rigide, dans laquelle les moyens (4) pour fixer une distance donnée entre la gaine intérieure (2) et la pré-gaine (3) sont ancrés par obstacles.

9. Procédé selon la revendication 8, caractérisé par le fait
- qu'avant de mettre en place la pré-gaine (3) on place dans la canalisation (1) à réhabiliter une gaine (7) thermoplastique supplémentaire sous forme de tuyau souple et
- que la gaine (7) supplémentaire est pourvue sur sa face intérieure ou la pré-gaine (3) est pourvue sur sa face extérieure de moyens (8) pour fixer une distance entre la pré-gaine (3) et la gaine (7) thermoplastqiue supplémentaire, un espace (9) libre annulaire étant formé entre la pré-gaine (3) et la gaine (7) supplémentaire, en tant que chambre de contrôle pour détecter et le cas échéant éliminer des fuites dans l'une des gaines.

10. Procédé selon l'une des revendications 8 ou 9, caractérisé par le fait que l'on utilise comme masse durcissable un mortier (6) fluide.

11. Système selon l'une des revendications 9 ou 10, caractérisé par un textile imprégné d'une substance gonflante ou analogue, comme couche auto-étanche disposée entre les gaines extérieures (3, 7).
